# EUROPÄISCHE PATENTSCHRIFT

(11) **EP 1 985 536 B1**
(45) Veröffentlichungstag und Bekanntmachung des Hinweises auf die Patenterteilung: **01.02.2012**
(21) Anmeldenummer: 08154292.0
(22) Anmeldetag: 10.04.2008
(51) Int. Cl.: B64C 27/605, B64C 27/615, B64C 27/72

(54) **Steuerungseinrichtung eines Hubschrauber-Hauptrotors**
Control device for a helicopter main rotor
Dispositif de commande d'un rotor principal d'hélicoptère

(30) Priorität: 26.04.2007 DE 102007020079
(43) Veröffentlichungstag der Anmeldung: 29.10.2008
(73) Patentinhaber: ZF Friedrichshafen AG, 88038 Friedrichshafen (DE)
(72) Erfinder: Wintjen, Carsten, 34393 Grebenstein (DE); Hausberg, André, 34131 Kassel (DE); Fürst, Daniel, 34119 Kassel (DE)

(56) Entgegenhaltungen:
- EP-A1- 1 655 221
- DE-A1-102005 007 129
- US-A- 4 379 678
- US-A- 4 534 704
- US-A1- 2005 123 400
- GOETTE H-J: "EINZELBLATTSTEUERUNG BEIM HUBSCHRAUBER DURCH SERVOHYDRAULISCHE AKTUATOREN IM ROTORKOPF", AACHENER FLUIDTECHNISCHES KOLLOQUIUM, XX, XX, 1. Januar 1994 (1994-01-01), Seiten 209-225, XP001113000,

## Beschreibung

Die Erfindung betrifft ein Hubschrauber-Hauptrotor mit einer Steuerungseinrichtung bei dem mehrere Rotorblätter an einem Rotorkopf einer Rotorwelle umfangsseitig verteilt angeordnet und um eine Blattlängsachse drehbar oder verwindbar gelagert sind, wobei zur kollektiven Blattwinkelverstellung der Rotorblätter ein im ruhenden System angeordneter und über Stellmittel mit den Blattwurzeln der Rotorblätter in Wirkverbindung stehender Kollektivaktuator vorgesehen ist, und zur zyklischen und individuellen Blattwinkelverstellung jedem Rotorblatt mindestens ein im rotierenden System angeordneter Individualaktuator zugeordnet ist. Die Erfindung betrifft auch einen zweiten Hubschrauber-Hauptrotor, mit einer Steuerungseinrichtung bei dem mehrere Rotorblätter an einem Rotorkopf einer Rotorwelle umfangsseitig verteilt angeordnet und um eine Blattlängsachse drehbar oder verwindbar gelagert sind, wobei zur zyklischen sowie individuellen Blattwinkelverstellung jedem Rotorblatt mindestens ein im rotierenden System angeordneter Individualaktuator zugeordnet ist. Bei diesem letztgenannten Steuerungssystem ist demnach kein gesonderter Kollektivaktuator vorhanden.

Die Primärsteuerung des Hauptrotors eines Hubschraubers besteht aus einer kollektiven Blattwinkelverstellung, mit der die Einstellwinkel der Rotorblätter zur Steuerung von Steig- und Sinkbewegungen des Hubschraubers identisch eingestellt werden, und aus einer dieser überlagerten zyklischen Blattwinkelverstellung, mit der die Einstellwinkel der Rotorblätter zur Steuerung von Längsbewegungen des Hubschraubers, insbesondere eines Vorwärtsfluges, phasenverschoben mit gleicher Drehwinkelorientierung sinusförmig mit der Drehfrequenz des Hauptrotors verstellt werden. Durch die zyklische Blattwinkelverstellung wird die durch die Spur der Blattspitzen der Rotorblätter beschriebene Rotorblattebene in Richtung der durch eine entsprechende Verschwenkung eines Steuerknüppels gewählten Flugrichtung geneigt, wodurch der von dem Hauptrotor erzeugte Schubvektor entsprechend gekippt wird und demzufolge eine Antriebskomponente in die gewählte Flugrichtung aufweist.

Die Ansteuerung der Rotorblätter des Hauptrotors erfolgt üblicherweise über eine so genannte Taumelscheibe, in welche die Steuerbewegungen der kollektiven Blattwinkelverstellung und der zyklischen Blattwinkelverstellung eingeleitet und einander überlagert werden. Die Taumelscheibe besteht im Wesentlichen aus einem ruhenden, nicht rotierenden Element, und einem mit der Rotorwelle mitrotierenden Ringelement, die drehbar miteinander verbunden und bezüglich der Drehachse der Rotorwelle axial verschiebbar und kippbar gelagert sind. Die Steuerkommandos eines Piloten werden bei einer mechanischen Betätigung über eine Mischhebelanordnung und bei einer hilfskraftgestützten Betätigung über Aktuatoren in das nicht rotierende Ringelement eingeleitet, wobei eine kollektive Blattwinkelverstellung in Form einer Axialverschiebung und eine zyklische Blattwinkelverstellung in Form einer Kippbewegung des ruhenden Ringelementes in die Taumelscheibe eingeleitet wird. Im rotierenden System werden diese Steuerbewegungen von dem rotierenden Ringelement zumeist über Gestängeanordnungen in Stellelemente der Rotorblätter eingeleitet, deren Verdrehung oder Verschiebung jeweils unmittelbar oder mittelbar zu den entsprechenden Einstellwinkeln der Rotorblätter führt.

Eine weitere bekannte Bauart einer Steuerungseinrichtung eines Hauptrotors wird als Spinnensteuerung bezeichnet, bei der die eingangsseitigen Steuerbewegungen und Steuerkräfte anstelle einer koaxial über der Rotorwelle angeordneten Taumelscheibe in prinzipiell ähnlicher Weise über eine zentral innerhalb der Rotorwelle angeordnete Kugellagerung von dem ruhenden in das rotierende System des Hauptrotors übertragen und über eine bezüglich der Drehachse der Rotorwelle axial verschiebbare sowie kippbare Steuerspinne in die Rotorblätter eingeleitet werden.

Da die zyklische Blattwinkelverstellung selbst sowie aerodynamische Effekte, wie z.B. das Erreichen der kritischen Machzahl an der Blattspitze des jeweils in Flugrichtung vorlaufenden Rotorblattes und Blatt-Wirbel-Interferenzen durch das Eintauchen eines Rotorblattes in die Nachlaufwirbel des vorlaufenden Rotorblattes, zu Vibrationen, zu Lärmabstrahlungen und zur Reduzierung der aerodynamischen Effizienz führen, wird seit längerem versucht, diesen unerwünschten Effekten im Rahmen einer Sekundärsteuerung des Hauptrotors z.B. durch eine höherharmonische Blattwinkelverstellung (HHC = higher harmonic control) und/oder durch eine individuelle Einzelblattsteuerung (IBC = individual blade control) aktiv entgegenzuwirken. Durch derartige Maßnahmen können für einen entsprechenden Hubschrauber eine geringere dynamische Belastung und eine entsprechend höhere Lebensdauer der Bauteile, ein geringerer Wartungsaufwand, höhere Flugleistungen sowie ein höherer Flugkomfort für die betreffenden Piloten und Passagiere erzielt werden.

Die Änderung des Anstellwinkels der Rotorblätter kann in an sich bekannter Weise jeweils unmittelbar durch die exzentrische Anlenkung einer mit der Taumelscheibe oder der Steuerspinne in Verbindung stehenden Zug-/Schubstange an der Blattwurzel des jeweiligen Rotorblattes erfolgen, wodurch das Rotorblatt bei einer drehbeweglichen Lagerung um seine Längsachse gedreht und bei einer gelenklosen Lagerung durch eine Verwindung eines zwischen dem Rotorkopf und der Blattwurzel angeordneten torsionselastischen Blatthalses um seine Längsachse verschwenkt wird. Es ist jedoch auch möglich, durch die Verstellung einer an der Hinterkante oder der Vorderkante des Rotorblattes angeordneten Klappe eine Verdrehung oder Verwindung des Rotorblattes und damit eine Änderung des Anstellwinkels oder der Schränkung des betreffenden Rotorblattes indirekt auf aerodynamische Weise zu bewirken.

Eine derartige Steuerungseinrichtung ist beispielsweise in der US 3 077 934 A beschrieben. Bei dieser bekannten Steuerungseinrichtung sind die Rotorblätter des Hauptrotors jeweils an ihrer Blattwurzel um ihre Längsachse gegen die Rückstellkraft einer Torsionsfeder drehbar gelagert und mit einer Hinterkantenklappe versehen. Die Hinterkantenklappen werden rein mechanisch über eine Gestängevorrichtung betätigt, die mit einer Taumelscheibe versehen und teilweise innerhalb der hohlen Rotorwelle angeordnet ist. Ein Ausschlag einer Hinterkantenklappe nach oben führt zu einer entgegengerichteten Verdrehung des betreffenden Rotorblattes, wodurch der Anstellwinkel und damit die erzeugte Auftriebskraft des betreffenden Rotorblattes erhöht werden.

Da die mechanische Zwangskopplung der Rotorblätter durch eine Taumelscheibe oder eine Steuerspinne die Einsteuerung höherharmonischer oder individueller Steuerkommandos zur Blattwinkelverstellung über das ruhende System der Steuerungseinrichtung zumindest stark einschränkt, sind verschiedene Lösungen vorgeschlagen worden, bei denen die Sekundärsteuerung der Rotorblätter, also eine höherharmonische und/oder individuelle Blattwinkelverstellung (HHC, IBC), durch innerhalb des rotierenden Systems angeordnete und jeweils jedem Rotorblatt individuell zugeordnete hilfskraftbetätigte Aktuatoren erfolgt.

Eine derartige Steuerungseinrichtung ist beispielsweise aus der DE 101 25 178 A1 bekannt. Bei dieser bekannten Steuerungseinrichtung ist zusätzlich zu der durch eine mit einer Taumelscheibe versehenen Gestängeanordnung gebildeten Primärsteuerung jedem Rotorblatt ein durch einen in der jeweiligen Zug-/Schubstange angeordneten Linearaktuator gebildeter Sekundäraktuator zugeordnet. Die kollektive und zyklische Blattwinkelverstellung erfolgt über die Primärsteuerung. Den entsprechenden Steuerausschlägen der Zug-/ Schubstangen werden die über die unabhängig ansteuerbaren Sekundäraktuatoren erzeugten Steuerausschläge zur höherharmonischen und individuellen Blattwinkelverstellung additiv überlagert. Aufgrund der seriellen Anordnung der Sekundäraktuatoren ist die Primärsteuerung der Blattwinkelverstellung bei einem Ausfall eines oder mehrerer Sekundäraktuatoren beeinträchtigt. Daher sind die Sekundäraktuatoren verriegelbar ausgebildet, vorliegend in umfangsseitig gleichverteilten Gruppen in ihren oberen bzw. unteren Endlagen.

Aufgrund entsprechender Entwicklungsfortschritte in der Steuerungsund Antriebstechnik kann durch den Einsatz von im rotierenden System angeordneten und jedem Rotorblatt individuell zugeordneten Primäraktuatoren auch gänzlich auf eine mechanische Blattwinkelverstellung mit einer Zwangskopplung durch eine Taumelscheibe oder eine Steuerspinne verzichtet werden.

Eine derartige Steuerungseinrichtung ist in der DE 103 48 981 A1 beschrieben. Bei dieser bekannten Steuerungseinrichtung ist zur kollektiven und zyklischen Blattwinkelverstellung jeweils jedem Rotorblatt ein Primäraktuator zugeordnet, der im rotierenden System an einer starr mit dem Rotorkopf verbundenen Trägereinrichtung angeordnet und in einer Ausführung als Linearaktuator mit einem mit der Blattwurzel des zugeordneten Rotorblattes verbundenen Blattverstellhebel in Verbindung steht. Aufgrund der Primärsteuerungsfunktion müssen die Primäraktuatoren zur Erzielung einer ausreichend hohen Betriebssicherheit relativ robust und/oder redundant ausgeführt sein, was nachteilig mit einem hohen Gewicht und einem großen Bauraumbedarf verbunden ist.

Eine andere derartige Steuerungseinrichtung ist aus der DE 601 01 928 T2 (EP 1 172 293 B1) bekannt. Bei dieser bekannten Steuerungseinrichtung weist jedes Rotorblatt jeweils mehrere in Spannweitenrichtung nebeneinander angeordnete Hinterkantenklappen auf, die jeweils über zwei funktionstechnisch parallel geschaltete elektrische Aktuatoren auslenkbar sind. Über die Verstellung der Hinterkantenklappen mittels der Aktuatoren können sowohl die Funktionen der Primärsteuerung (kollektive und zyklische Blattwinkelverstellung) als auch die Funktionen der Sekundärsteuerung (höherharmonische und individuelle Blattwinkelverstellung) erfüllt werden, wobei eine große Flexibilität in der Zuordnung der verschiedenen Funktionen auf die Hinterkantenklappen gegeben ist. Der Bauaufwand für die Rotorblätter und die betreffende Steuerungseinrichtung ist jedoch erheblich.

Eine weitere derartige Steuerungseinrichtung wird in der DE 10 2005 007 129 A1 vorgeschlagen. In dieser bekannten Steuerungseinrichtung ist jedem Rotorblatt ein Primäraktuator für die kollektive und zyklische Blattwinkelverstellung sowie mindestens ein Sekundäraktuator für die höherharmonische und individuelle Blattwinkelverstellung zugeordnet. Die Primäraktuatoren sind bevorzugt zwischen dem Rotorkopf der Rotorwelle und der Blattwurzel des jeweiligen Rotorblattes derart wirksam angeordnet, dass durch ihre Betätigung die Blattwurzel des betreffenden Rotorblattes um die zugeordnete Längsachse gegenüber dem Rotorkopf verdreht und somit der Anstellwinkel des Rotorblattes entsprechend verändert wird. Die Sekundäraktuatoren können als zusätzliche Blattwurzelaktuatoren ausgebildet sein, die jeweils zwischen dem Primäraktuator sowie der Blattwurzel angeordnet und somit dem betreffenden Primäraktuator funktionstechnisch seriell nachgeordnet sind. Alternativ oder ergänzend dazu ist auch eine Ausbildung der Sekundäraktuatoren als innerhalb der Rotorblätter angeordnete Stellantriebe von Rotorblattklappen, wie insbesondere von Hinterkantenklappen, möglich. Zur Gewährleistung einer ausreichenden Betriebssicherheit des Hubschraubers stehen die Primäraktuatoren vorliegend über eine mechanische Kopplungseinrichtung in Form einer Gestängespinne miteinander in Verbindung, die entweder elastische Gelenkelemente und/oder bedarfsweise aktivierbare Verriegelungsmittel aufweist.

Um eine derart aufwendige Kopplungseinrichtung zu vermeiden, ist in einer bekannten Steuerungseinrichtung gemäß der DE 10 2004 053 001 A1 vorgesehen, dass für die kollektive Blattwinkelverstellung der Rotorblätter ein einziger, im ruhenden System angeordneter und über Stellmittel, wie eine axial verschiebbare, jedoch nicht kippbare Steuerspinne, mit den Blattwurzeln der Rotorblätter in Wirkverbindung stehender Kollektivaktuator vorgesehen ist. Für die zyklische sowie die höherharmonische und individuelle Blattwinkelverstellung der Rotorblätter ist im rotierenden System jeweils jedem Rotorblatt ein Individualaktuator zugeordnet, der vorzugsweise als ein dem betreffenden Stellmittel des Primäraktuators funktionstechnisch nachgeordneter Blattwurzelaktuator ausgebildet ist. Da die Individualaktuatoren teilweise Funktionen der Primärsteuerung erfüllen, müssen diese ausreichend betriebssicher, also entsprechend robust und/oder redundant ausgebildet sein, was nachteilig zu einem hohen Gewicht und großem Bauraumbedarf führt. Ebenfalls ist die durch die funktionstechnisch serielle Anordnung der Aktuatoren bedingte mechanische Kopplung der Aktuatoren im Hinblick auf die mechanische Belastung der Stellmittel und die gegenseitige Beeinflussung bei auftretenden Störungen ungünstig.

Aufgrund der Nachteile der zuletzt genannten Steuerungseinrichtungen liegt der vorliegenden Erfindung die Aufgabe zugrunde, eine Steuerungseinrichtung eines Hubschrauber-Hauptrotors der eingangs genannten Art vorzuschlagen, die in Verbindung mit einem einfachen Aufbau eine erhöhte Betriebssicherheit sowie eine verbesserte Steuerbarkeit aufweist.

Gemäß den Merkmalen des ersten unabhängigen Anspruchs geht die Erfindung daher aus von einem Hubschrauber-Hauptrotor, mit einer Steuerungseinrichtung bei dem mehrere Rotorblätter an einem Rotorkopf einer Rotorwelle umfangsseitig verteilt angeordnet und um eine Blattlängsachse drehbar oder verwindbar gelagert sind, wobei zur kollektiven Blattwinkelverstellung der Rotorblätter ein im ruhenden System angeordneter sowie über Stellmittel mit den Blattwurzeln der Rotorblätter in Wirkverbindung stehender Kollektivaktuator vorgesehen ist, und zur zyklischen und individuellen Blattwinkelverstellung jedem Rotorblatt mindestens ein im rotierenden System angeordneter Individualaktuator zugeordnet ist. Zur Lösung der gestellte Aufgabe ist außerdem vorgesehen, dass jedes Rotorblatt mindestens eine um eine zur Blattlängsachse parallele oder koaxiale Drehachse schwenkbar gelagerte Rotorblattklappe aufweist, die mittels eines innerhalb des betreffenden Rotorblattes angeordneten Klappenaktuators auslenkbar ist, wobei die Klappenaktuatoren für die Funktionen des Individualaktuators vorgesehen und entsprechend ausgebildet sind.

Gemäß dem zweiten unabhängigen Patentanspruch betrifft die Erfindung ein Hubschrauber-Hauptrotor, mit einer Steuerungseinrichtung bei dem mehrere Rotorblätter an einem Rotorkopf einer Rotorwelle umfangsseitig verteilt angeordnet und um eine Blattlängsachse drehbar oder verwindbar gelagert sind, wobei zur zyklischen sowie individuellen Blattwinkelverstellung jedem Rotorblatt mindestens ein im rotierenden System angeordneter Individualaktuator zugeordnet ist. Zur Lösung der gestellten Aufgabe ist zudem vorgesehen, dass jedes Rotorblatt mindestens eine um eine zur Blattlängsachse parallele oder koaxiale Drehachse schwenkbar gelagerte Rotorblattklappe aufweist, die mittels eines innerhalb des betreffenden Rotorblattes angeordneten Klappenaktuators auslenkbar ist, wobei die Klappenaktuatoren für die Funktionen des Individualaktuators vorgesehen und entsprechend ausgebildet sind, und bei der jedem Rotorblatt zusätzlich mindestens ein Blattwurzelaktuator zugeordnet ist, der jeweils am Rotorkopf angeordnet ist und mit der Blattwurzel des betreffenden Rotorblattes in Wirkverbindung steht.

Die letztgenannte Steuerungseinrichtung verzichtet bewusst auf den Kollektivaktuator gemäß der ersten Steuerungseinrichtung, so dass bei Nutzung des Grundgedankens der Erfindung der Herstell- und Wartungsaufwand sowie die Komplexität der Steuerungseinrichtung reduziert sind.

Vorteilhafte und zweckmäßige Ausgestaltungen und Weiterbildungen der erfindungsgemäßen Steuerungseinrichtung sind Gegenstand der jeweils zugeordneten Ansprüche 3 bis 12.

Der Erfindung liegt die Erkenntnis zu Grunde, dass eine von der Funktion des Kollektivaktuators mechanisch unabhängige Steuerung der Funktionen des jeweiligen Individualaktuators belastungs- und steuerungstechnisch vorteilhafter ist, und auf einfache Weise in Form von in jedem Rotorblatt angeordneten sowie jeweils eine Rotorblattklappe betätigenden Klappenaktuatoren realisiert werden kann. Die Klappenaktuatoren können als mit hydraulischer, pneumatischer oder elektrischer Hilfsenergie betreibbare Linear- oder Rotationsstellantriebe ausgebildet sein, die unmittelbar oder über Stellmittel, wie Gestänge-, Hebel- oder Zahnradgetriebe, mit der jeweils zugeordneten Rotorblattklappe in Wirkverbindung stehen.

Bei den Rotorblattklappen handelt es sich vorzugsweise um Hinterkantenklappen, die z.B. aus der DE 601 01 928 T2 bekannt sind. Möglich ist jedoch auch eine Ausbildung der Rotorblattklappen als Vorderkantenklappen, die in einer dem Blattprofil vorgelagerten Ausführung aus der US 5 409 183 A bekannt sind. Unter einer Rotorblattklappe wird vorliegend jedoch auch ein elastisch verformbarer Abschnitt des Blattprofils verstanden, z.B. ein nach Art einer Klappe elastisch verformbarer Hinterkantenabschnitt eines Rotorblattes, welches an sich aus der DE 103 34 267 A1 bekannt ist. Da der Ausschlag einer Rotorblattklappe letztlich zu einer Verwindung eines torsionselastischen Rotorblattes führt, kann auch eine Aktuatoranordnung zur unmittelbaren Verwindung des Blattprofils, wie sie beispielsweise aus der DE 36 14 371 A1 bekannt ist, im weitesten Sinn als Rotorblattklappe bezeichnet werden.

Während bei der Steuerungseinrichtung gemäß dem Anspruch 1 also mittels des Kollektivaktuators über die betreffenden Stellmittel, wie Steuerstangen und Steuerhebel, die für die Steuerung des Steig- und Sinkfluges des Hubschraubers erforderliche kollektive Einstellung des Einstellwinkels der Rotorblätter identisch an allen Blattwurzeln erfolgt, wird die für den Horizontalflug des Hubschraubers erforderliche zyklische Blattwinkelverstellung des Anstellwinkels sowie die im Wesentlichen zur Vibrations- und Lärmbekämpfung eingesetzte höherharmonische sowie individuelle Blattwinkelverstellung erfindungsgemäß über eine Betätigung der Rotorblattklappen durchgeführt. Dabei wird beispielsweise durch den Ausschlag einer radial außen angeordneten Hinterkantenklappe ein dem Klappenausschlag entgegengerichtetes Nickmoment erzeugt, durch welches ein torsionselastisches Rotorblatt bis zur Blattwurzel verwunden und damit die Anstellwinkelverteilung des Rotorblattes entsprechend verändert wird. Aufgrund der vorliegend mechanisch voneinander unabhängigen Blattverstellung über den Kollektivaktuator und die Individualaktuatoren ist eine sehr genaue Einzelblattsteuerung möglich.

Bei der Steuerungseinrichtung gemäß dem zweiten unabhängigen Patentanspruch ist keine zwangsgekoppelte Kollektivverstellung der Rotorblätter des Hauptrotors vorgesehen. Im Normalbetrieb ist eine Aufteilung der Funktionen der Individualaktuatoren zwischen den Klappenaktuatoren und jedem Rotorblatt zugeordneten Blattwurzetaktuatoren vorgesehen. Die zyklische Blatt-winkelverstellung erfolgt über Blattwurzelaktuatoren, welche zur Steuerung eines Notsinkfluges vorzugsweise über gesonderte Verriegelungsmittel verfügen, mit denen in einem solchen Betriebsfall die dafür vorteilhafte Rotorblattwinkeleinstellung fixierbar ist. Um bei einem Ausfall eines oder mehrerer der Blattwurzelaktuatoren dessen Funktion zumindest teilweise aufrechterhalten zu können, ist bevorzugt vorgesehen, dass die Klappenaktuatoren sowie die Rotorblattklappen derart ausgebildet sind, dass auch mit diesen diejenige zyklische Blattwinkelverstellung durchführbar ist, die von dem ausgefallenen Blattwurzelaktuator durchzuführen wäre. Darauf wird noch weiter eingegangen.

Um die insbesondere für die zyklische Blattwinkelverstellung erforderliche Betriebssicherheit zu erreichen, sind vorzugsweise jeder Rotorblattklappe mindestens zwei funktionstechnisch parallel geschaltete Klappenaktuatoren zugeordnet. Aufgrund der damit gegebenen Redundanz können die Klappenaktuatoren eine höhere Ausfallwahrscheinlichkeit aufweisen, also leichter, kompakter und preiswerter herstellbar ausgebildet sein.

Eine Erhöhung der Betriebssicherheit ist jedoch auch dadurch erzielbar, dass jedes Rotorblatt mindestens zwei radial beabstandet angeordnete und jeweils um eine zu der Blattlängsachse parallele oder koaxiale Drehachse schwenkbar gelagerte Rotorblattklappen aufweist, die jeweils mittels eines innerhalb des betreffenden Rotorblattes angeordneten und unabhängig ansteuerbaren Klappenaktuators auslenkbar sind, wobei im Normalbetrieb eine Aufteilung der Funktionen der Individualaktuatoren zwischen den Klappenaktuatoren der radial inneren Rotorblattklappen und den Klappenaktuatoren der radial äußeren Rotorblattklappen vorgesehen ist.

Für den Normalbetrieb ist aus Festigkeits- und Steuerbarkeitsgründen zweckmäßig vorgesehen, dass die Klappenaktuatoren der radial inneren Rotorblattklappen die Funktion der zyklischen Blattwinkelverstellung und die Klappenaktuatoren der radial äußeren Rotorblattklappen die Funktionen der höherharmonischen sowie individuellen Blattwinkelverstellung erfüllen und entsprechend ausgebildet sind. Die zyklische Blattwinkelverstellung erfordert relativ große und niederfrequente Anstellwinkeländerungen und erfolgt daher aus Festigkeits- und Steuerungsgründen bevorzugt am radial inneren Teil der Rotorblätter, wogegen die höherharmonische sowie individuelle Blattwinkelverstellung relativ kleine und höherfrequente Anstellwinkeländerungen erfordert und demzufolge bevorzugt am radial äußeren Teil der Rotorblätter erfolgt.

Für einen zumindest kurzzeitigen Notbetrieb ist es jedoch vorteilhaft, wenn die Klappenaktuatoren der radial inneren Rotorblattklappen und die Klappenaktuatoren der radial äußeren Rotorblattklappen jeweils für die alleinige Übernahme der Funktionen der zyklischen Blattwinkelverstellung und der höherharmonischen sowie individuellen Blattwinkelverstellung ausgebildet sind. Fällt bei einem solchen System beispielsweise die Steuerung oder die Energieversorgung der radial äußeren Rotorblattklappen aus, so kann der Funktionsumfang aller Rotorblattklappen bei entsprechender Auslegung zumindest kurzzeitig alleine von den radial inneren Rotorblattklappen erfüllt werden, so dass zumindest eine problemlose Sicherheitslandung des Hubschraubers möglich ist.

Alternativ oder zusätzlich zur Verwendung weiterer Rotorblattklappen ist es zur Erhöhung der Betriebssicherheit bei der Steuerungseinrichtung gemäß den Merkmalen des ersten unabhängigen Patentanspruchs auch möglich, dass jedem Rotorblatt zusätzlich mindestens ein Blattwurzelaktuator zugeordnet ist, der jeweils am Rotorkopf angeordnet ist und mit der Blattwurzel des betreffenden Rotorblattes in Wirkverbindung steht, wobei im Normalbetrieb eine Aufteilung der Funktionen der Individualaktuatoren zwischen den Klappenaktuatoren und den Blattwurzelaktuatoren vorgesehen ist.

Für den Normalbetrieb ist aus Festigkeits- und Steuerbarkeitsgründen vorgesehen, dass die Blattwurzelaktuatoren für die Funktion der zyklischen Blattwinkelverstellung und die Klappenaktuatoren für die Funktion der höherharmonischen sowie individuellen Blattwinkelverstellung erfüllen und entsprechend ausgebildet sind. In diesem Fall wird die über den Kollektivaktuator erfolgende kollektive Blattwinkelverstellung jeweils an der Blattwurzel mit der über die Blattwurzelaktuatoren erfolgenden zyklischen Blattwinkelverstellung überlagert.

Für einen Notbetrieb ist es jedoch vorteilhaft, wenn die Blattwurzelaktuatoren und die Klappenaktuatoren jeweils für die alleinige Übernahme der Funktionen der zyklischen Blattwinkelverstellung und der höherharmonischen sowie individuellen Blattwinkelverstellung ausgebildet sind. Fällt dann beispielsweise die Steuerung oder die Energieversorgung der Blattwurzelaktuatoren aus, so kann der Funktionsumfang der Blattwurzelaktuatoren und der Rotorblattklappen bei entsprechender Auslegung zumindest kurzzeitig alleine von den Rotorblattklappen erfüllt werden, wodurch zumindest eine problemlose Sicherheitslandung des Hubschraubers gewährleistet ist.

Gemäß einem anderen Aspekt der Erfindung kann aber auch vorgesehen sein, dass die Blattwurzelaktuatoren so ausgebildet sind, dass diese im Normalbetrieb sowohl die Funktionen der zyklischen Blattwinkelverstellung als auch in Teilarbeitsbereichen die Funktionen der höherharmonischen sowie individuellen Blattwinkelverstellung übernehmen können, und dass die Klappenaktuatoren sowie deren Klappen derart ausgebildet sind, dass diese im Normalbetrieb sowohl die Funktionen der höherharmonischen und individuellen Blattwinkelverstellung als auch in Teilarbeitsbereichen die der zyklischen Blattwinkelverstellung übernehmen können.

Beispielhaft können die Blattwurzelaktuatoren so ausgebildet sein und derart angesteuert werden, dass mit diesen die zyklische Blattwinkeleinstellung vollständig durchführbar ist, und dass mit diesen zusätzlich 20% bis 40% der höherfrequenten Blattwinkelstellvorgänge der höherharmonischen und individuellen Blattwinkelverstellung durchführbar sind. Ebenso sind die Klappenaktuatoren und die Rotorblattklappen derart ausgebildet, dass mit diesen zusätzlich zu ihrem Normalarbeitsbereich zur höherharmonischen und individuellen Blattwinkelverstellung 20% bis 40% der zyklischen, niederfrequenten Blattwinkelstellvorgänge durchführbar sind. Durch diese einander überlappenden Normal - Arbeitsbereiche der Klappenaktuatoren und der Blattwurzelaktuatoren kann beim Ausfall der jeweils rotorblattbezogenen anderen Aktuatoren dennoch ein sicherer und weitgehend komfortabler Weiterflug gewährleistet werden.

Sämtliche vorbeschriebenen Aktuatoren können in an sich bekannter Weise hydraulisch, pneumatisch oder elektrisch betreibbar ausgebildet sein.

Zur Verdeutlichung der Erfindung ist der Beschreibung eine Zeichnung beigefügt. In diesen zeigt
- Fig. 1: einen Hauptrotor eines Hubschraubers mit einer ersten bevorzugten Ausführung der erfindungsgemäßen Steuerungseinrichtung in einer schematischen Perspektivansicht,

- Fig. 2: einen Hauptrotor eines Hubschraubers mit einer zweiten bevorzugten Ausführung der erfindungsgemäßen Steuerungseinrichtung dargestellt wie in Fig. 1,
- Fig. 3: einen Hauptrotor eines Hubschraubers mit einer dritten bevorzugten Ausführung der erfindungsgemäßen Steuerungseinrichtung in einer schematischen Perspektivansicht, und
- Fig. 4: eine praktische Ausführung eines mit Blattwurzelaktuatoren versehenen Hauptrotors in einer Perspektivdarstellung.

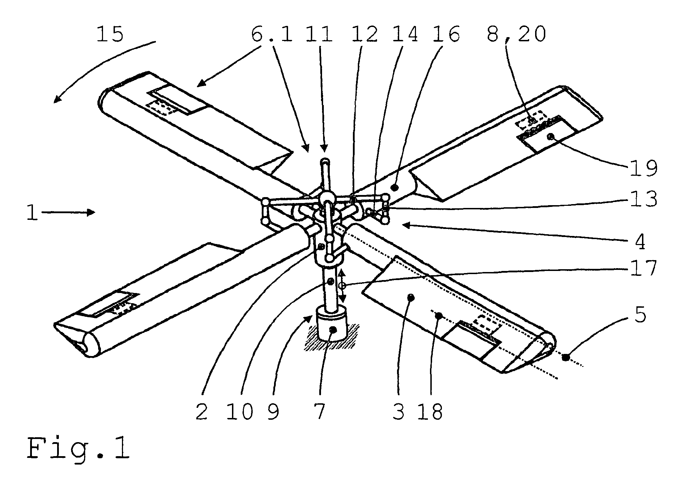

In Fig. 1 ist ein Hauptrotor 1 eines nicht weiter dargestellten Hubschraubers mit einer Rotorwelle 2 und vier Rotorblättern 3 abgebildet. Am Rotorkopf 4 der Rotorwelle 2 sind die Rotorblätter 3 umfangsseitig verteilt angeordnet und um ihre radial verlaufende Blattlängsachse 5 drehbar oder verwindbar gelagert. Eine Steuerungseinrichtung 6.1 des Hauptrotors 1 umfasst einen Kollektivaktuator 7 und jeweils einen Individualaktuator 8 pro Rotorblatt 3.

Der Kollektivaktuator 7 dient zur kollektiven Blattwinkelverstellung der Rotorblätter 3 und ist vorliegend unterhalb der Rotorwelle 2 im ruhenden System angeordnet und zum Beispiel an einer nicht abgebildeten Zelle des Hubschraubers befestigt. Vorliegend ist der Kollektivaktuator 7 als ein Linearaktuator ausgebildet und steht über ein Drehlager 9 mit einer Stange 10 in Verbindung, die axialbeweglich und mitdrehbar innerhalb der hohlen Rotorwelle 2 gelagert ist. An dem aus dem Rotorkopf 4 herausragenden oberen Ende der Stange 10 ist eine mechanische Verstellvorrichtung in Form so genannten Spinne 11 mit jeweils einem Kragarm 12 pro Rotorblatt 3 angeordnet, die starr mit der Stange 10 verbunden ist. Jeder Kragarm 12 steht jeweils über eine Verbindungsstange 13 gelenkig mit einem Stellhebel 14 in Verbindung, der auf der der Drehrichtung 15 des Hauptrotors 1 abgewandten Rückseite starr an der Blattwurzel 16 (bzw. dem Blatthals) des zugeordneten Rotorblattes 3 befestigt ist. Durch eine mittels einer Betätigung des Kollektivaktuators 7 bewirkte Axialverschiebung 17 der Stange 10 wird somit an den Blattwurzeln 16 eine an allen Rotorblättern 3 identische Änderung des Anstellwinkels derselben vorgenommen.

Die Individualaktuatoren 8 in den Rotorblättern 3 dienen zur zyklischen sowie höherharmonischen und individuellen Blattwinkelverstellung der Rotorblätter 3 und sind im rotierenden System des Hauptrotors 1 angeordnet. In einer ersten bevorzugten Ausführungsform der Steuerungseinrichtung 6.1 gemäß Fig. 1 weist jedes Rotorblatt 3 eine um eine zur Blattlängsachse 5 parallele Drehachse 18 schwenkbar gelagerte, vorliegend als Hinterkantenklappe ausgebildete Rotorblattklappe 19 auf, die mittels eines innerhalb des betreffenden Rotorblattes 3 angeordneten Klappenaktuators 20 auslenkbar ist. Die Individualaktuatoren 8 sind somit bei dieser ersten Ausführungsvarinate alleine durch die Klappenaktuatoren 20 gebildet.

Da der Kollektivaktuator 7 im ruhenden System angeordnet ist, kann dieser zur Erzielung der erforderlichen Betriebssicherheit der kollektiven Blattwinkelverstellung problemlos ausreichend robust oder redundant ausgeführt werden. Da die zyklische Blattwinkelverstellung ebenfalls eine sicherheitsrelevante Primärsteuerungsfunktion darstellt, sind bevorzugt jeder Rotorblattklappe 19 mindestens zwei funktionstechnisch parallel geschaltete Klappenaktuatoren 20 zugeordnet, welches in Fig. 1 jedoch nicht explizit dargestellt ist. Der Aufbau der Steuerungseinrichtung 6.1 ist insgesamt vergleichsweise einfach aufgebaut sowie kostengünstig realisierbar. Zudem weist die Steuerungseinrichtung 6.1 aufgrund ihres prinzipiellen Aufbaus eine hohe Betriebssicherheit sowie gute Steuerungseigenschaften auf.

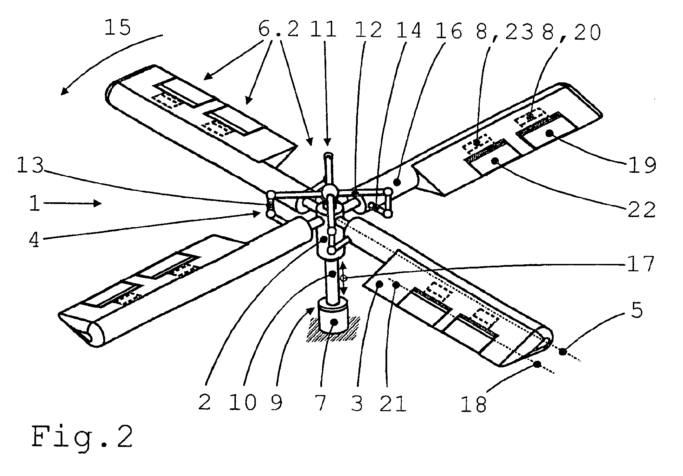

In einer zweiten bevorzugten Ausführungsform der Steuerungseinrichtung 6.2 der Erfindung gemäß Fig. 2 weist jedes Rotorblatt 3 zusätzlich zu der bereits vorhandenen Rotorblattklappe 19 jeweils eine weitere um eine zur Blattlängsachse 5 parallele Drehachse 21 schwenkbar gelagerte zweite Rotorblattklappe 22 auf, die mittels eines innerhalb des betreffenden Rotorblattes 3 angeordneten und unabhängig ansteuerbaren Klappenaktuators 23 auslenkbar ist. Der übrige Aufbau des Hauptrotors 1 und der Steuerungseinrichtung 6.2 entspricht demjenigen der ersten Ausführungsvariante gemäß Fig. 1.

Die zusätzlichen Rotorblattklappen 22 sind beispielhaft ebenfalls als Hinterkantenklappen ausgebildet und vorliegend radial innerhalb der vorhandenen Rotorblattklappen 19 angeordnet. Im Normalbetrieb sind die Funktionen der Individualsteuerung derart zwischen den Rotorblattaktuatoren 19 und 23 aufgeteilt, dass die Klappenaktuatoren 23 der radial inneren Rotorblattklappen 22 die Funktion der zyklischen Blattwinkelverstellung und die Klappenaktuatoren 20 der radial äußeren Rotorblattklappen 19 die Funktionen der höherharmonischen sowie individuellen Blattwinkelverstellung erfüllen. Die Klappenaktuatoren 20 und 23 sind jedoch zweckmäßig derart ausgebildet, dass jede Gruppe von Klappenaktuatoren 20, 23 im Notbetrieb, also beim Auftreten einer Störung in der jeweils anderen Gruppe von Aktuatoren 20, 23, jeweils zumindest kurzzeitig die Funktionen der Individualaktuatoren 8 alleine übernehmen kann. Die Steuerungseinrichtung 6.2 der zweiten Ausführung nach Fig. 2 weist somit gegenüber der ersten Ausführung nach Fig. 1 eine erhöhte Betriebssicherheit auf.

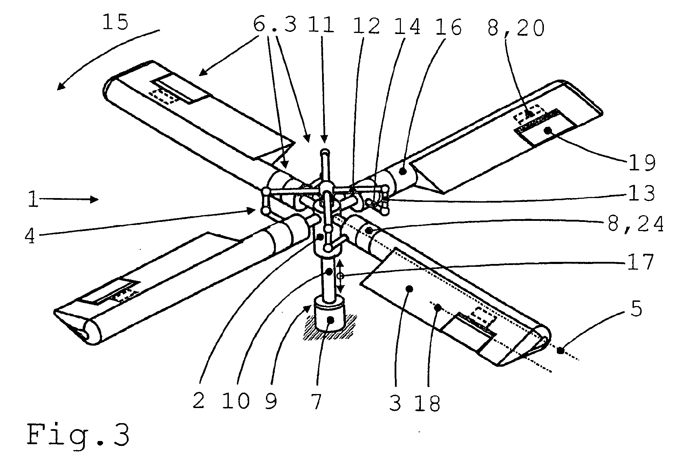

In einer dritten Ausführungsvariante der Steuerungseinrichtung 6.3 gemäß Fig. 3 weist jedes Rotorblatt 3 zusätzlich zu der bereits vorhandenen Rotorblattklappe 19 jeweils einen Blattwurzelaktuator 24 auf, der jeweils am Rotorkopf 4 angeordnet ist und mit der 16 Blattwurzel des betreffenden Rotorblattes 3 in Wirkverbindung steht. Der übrige Aufbau des Hauptrotors 1 und der Steuerungseinrichtung 6.3 entspricht demjenigen der ersten Ausführung gemäß Fig. 1.

Die zusätzlichen Blattwurzelaktuatoren 24 sind vorliegend beispielhaft als Rotationsstellantriebe ausgebildet und an der Blattwurzel 16 (bzw. am Blatthals) als dem Ort der Einleitung der kollektiven Blattwinkelverstellung über den jeweiligen Stellhebel 14 seriell nachgeschaltet angeordnet. Hierdurch wird die über die Blattwurzelaktuatoren 24 vorgenommene individuelle Blattwinkelverstellung der mittels des Kollektivaktuators 7 erfolgenden kollektiven Blattwinkelverstellung additiv überlagert. Im Normalbetrieb sind die Funktionen der Individualsteuerung derart zwischen den Klappenaktuatoren 20 und den Blattwurzelaktuatoren 24 aufgeteilt, dass die Blattwurzelaktuatoren 24 die Funktion der zyklischen Blattwinkelverstellung und die Klappenaktuatoren 20 die Funktionen der höherharmonischen sowie individuellen Blattwinkelverstellung erfüllen. Die Aktuatoren 20, 24 sind jedoch vorteilhaft derart ausgebildet, dass jede Gruppe von Aktuatoren 20, 24 im Notbetrieb, also beim Auftreten einer Störung in der jeweils anderen Gruppe von Aktuatoren 20, 24, jeweils zumindest kurzzeitig die Funktionen der Individualaktuatoren 8 alleine übernehmen kann. Die Steuerungseinrichtung 6.3 der dritten Ausführungsform nach Fig. 3 weist gegenüber der ersten Ausführung nach Fig. 1 ebenfalls eine erhöhte Betriebssicherheit auf.

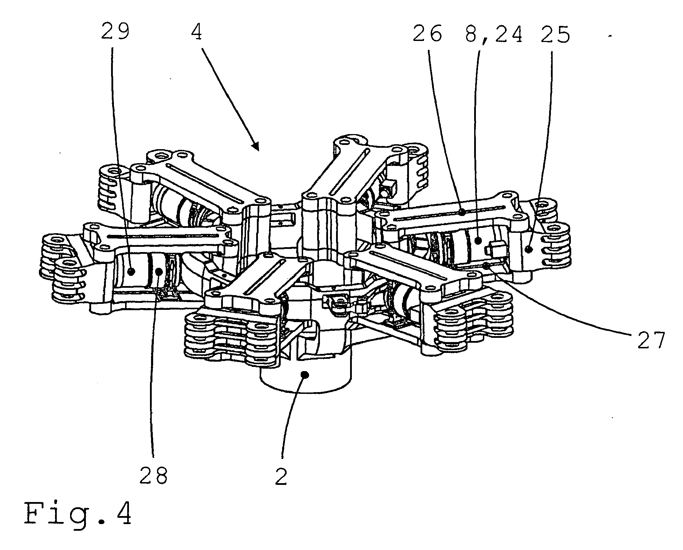

Zur Veranschaulichung einer realen Bauweise ist in Fig. 4 eine beispielhafte Ausführung eines mit Blattwurzelaktuatoren 24 versehenen Rotorkopfes 4 eines Hauptrotors 1 abgebildet. An dem Rotorkopf 4 sind umfangsseitig gleichverteilt sechs Anschlussflansche 25 zur Befestigung jeweils eines Rotorblatts 3 über jeweils einen oberen und einen unteren Befestigungsgurt 26, 27 befestigt. Zwischen den torsionselastisch ausgebildeten Befestigungsgurten 26, 27 ist jeweils ein als Rotationsstellantrieb ausgebildeter Blattwurzelaktuator 24 koaxial oder achsparallel zu der Blattlängsachse 5 des betreffenden Rotorblattes 3 angeordnet. Ein radial inneres Bauteil 28 der Blattwurzelaktuatoren 24, beispielsweise das Gehäuse eines Elektromotors oder der Zylinder eines Drehkolbenstellantriebs, ist jeweils nahe des Rotorkopfes 4 drehfest mit den Befestigungsgurten 26, 27 verbunden, während ein radial äußeres Bauteil 29 der Blattwurzelaktuatoren 24, beispielsweise der Rotor eines Elektromotors oder der Drehkolben eines Drehkolbenstellantriebs, jeweils drehfest mit dem betreffenden Anschlussflansch 25 verbunden ist. Weitere einer Steuerungseinrichtung 6.3 zur Blattwinkelverstellung zuzuordnende Bauteile sind in Fig. 4 nicht abgebildet.

### Bezugszeichen

- 1: Hauptrotor
- 2: Rotorwelle
- 3: Rotorblatt
- 4: Rotorkopf
- 5: Blattlängsachse
- 6.1: Steuerungseinrichtung
- 6.2: Steuerungseinrichtung
- 6.3: Steuerungseinrichtung
- 7: Kollektivaktuator
- 8: Individualaktuator
- 9: Drehlager
- 10: Stange
- 11: Spinne
- 12: Kragarm
- 13: Verbindungsstange
- 14: Stellhebel
- 15: Drehrichtung
- 16: Blattwurzel, Blatthals
- 17: Axialverschiebung
- 18: Drehachse
- 19: Rotorblattklappe
- 20: Klappenaktuator
- 21: Drehachse
- 22: Rotorblattklappe
- 23: Klappenaktuator
- 24: Blattwurzelaktuator
- 25: Anschlussflansch
- 26: Oberer Befestigungsgurt

- 27: Unterer Befestigungsgurt
- 28: Radial inneres Bauteil
- 29: Radial äußeres Bauteil

## Patentansprüche

1. Hubschrauber-Hauptrotor mit einer Steuerungseinrichtung, bei dem mehrere Rotorblätter (3) an einem Rotorkopf (4) einer Rotorwelle (2) umfangsseitig verteilt angeordnet und um eine Blattlängsachse (5) drehbar oder verwindbar gelagert sind, wobei zur kollektiven Blattwinkelverstellung der Rotorblätter (3) ein im ruhenden System angeordneter und über Stellmittel (9 - 14) mit den Blattwurzeln (16) der Rotorblätter (3) in Wirkverbindung stehender Kollektivaktuator (7) vorgesehen ist, und zur zyklischen sowie individuellen Blattwinkelverstellung jedem Rotorblatt (3) mindestens ein im rotierenden System angeordneter Individualaktuator (8) zugeordnet ist, **dadurch gekennzeichnet, dass** jedes Rotorblatt (3) mindestens eine um eine zur Blattlängsachse (5) parallele oder koaxiale Drehachse (18) schwenkbar gelagerte Rotorblattklappe (19) aufweist, die mittels eines innerhalb des betreffenden Rotorblattes (3) angeordneten Klappenaktuators (20) auslenkbar ist, wobei die Klappenaktuatoren (20) für die Funktionen des Individualaktuators (8) vorgesehen sind.

2. Hubschrauber-Hauptrotor mit einer Steuerungseinrichtung, bei dem mehrere Rotorblätter (3) an einem Rotorkopf (4) einer Rotorwelle (2) umfangsseitig verteilt angeordnet und um eine Blattlängsachse (5) drehbar oder verwindbar gelagert sind, wobei zur zyklischen sowie individuellen Blattwinkelverstellung jedem Rotorblatt (3) mindestens ein im rotierenden System angeordneter Individualaktuator (8) zugeordnet ist, wobei jedes Rotorblatt (3) mindestens eine um eine zur Blattlängsachse (5) parallele oder koaxiale Drehachse (18) schwenkbar gelagerte Rotorblattklappe (19) aufweist, die mittels eines innerhalb des betreffenden Rotorblattes (3) angeordneten Klappenaktuators (20) auslenkbar ist, wobei die Klappenaktuatoren (20) für die Funktionen des Individualaktuators (8) vorgesehen sind, und dass jedem Rotorblatt zusätzlich mindestens ein Blattwurzelaktuator (24) zugeordnet ist, der jeweils am Rotorkopf (4) angeordnet ist und mit der Blattwurzel (16) des betreffenden Rotorblattes (3) in Wirkverbindung steht, **dadurch gekennzeichnet, dass** im Normalbetrieb eine Aufteilung der Funktionen der Individualaktuatoren (8) zwischen den Klappenaktuatoren (20) und den Blattwurzelaktuatoren (24) vorgesehen ist.

3. Hubschrauber-Hauptrotor mit einer Steuerungseinrichtung nach Anspruch 1 oder 2, **dadurch gekennzeichnet, dass** jeder Rotorblattklappe (19) mindestens zwei funktionstechnisch parallel geschaltete Klappenaktuatoren (20) zugeordnet sind.

4. Hubschrauber-Hauptrotor mit einer Steuerungseinrichtung nach Anspruch 1, 2 oder 3, **dadurch gekennzeichnet, dass** jedes Rotorblatt mindestens zwei radial beabstandet angeordnete und jeweils um eine zu der Blattlängsachse (5) parallele oder koaxiale Drehachse (18, 21) schwenkbar gelagerte Rotorblattklappen (19, 22) aufweist, die jeweils mittels eines innerhalb des betreffenden Rotorblattes (3) angeordneten und unabhängig ansteuerbaren Klappenaktuators (20, 23) auslenkbar sind, wobei im Normalbetrieb eine Aufteilung der Funktionen der Individualaktuatoren (8) zwischen den Klappenaktuatoren (23) der radial inneren Rotorblattklappen (22) und den Klappenaktuatoren (20) der radial äußeren Rotorblattklappen (19) vorgesehen ist.

5. Hubschrauber-Hauptrotor mit einer Steuerungseinrichtung nach Anspruch 4, **dadurch gekennzeichnet, dass** die Klappenaktuatoren (23) der radial inneren Rotorblattklappen (22) im Normalbetrieb für die Funktion der zyklischen Blattwinkelverstellung und die Klappenaktuatoren (20) der radial äußeren Rotorblattklappen (19) im Normalbetrieb für die Funktionen der höherharmonischen und individuellen Blattwinkelverstellung vorgesehen sind.

6. Hubschrauber-Hauptrotor mit einer Steuerungseinrichtung nach Anspruch 4 oder 5, **dadurch gekennzeichnet, dass** die Klappenaktuatoren (23) der radial inneren Rotorblattklappen (22) und die Klappenaktuatoren (20) der radial äußeren Rotorblattklappen (19) für den Notbetrieb jeweils für die alleinige Übernahme der Funktionen der zyklischen Blattwinkelverstellung und der höherharmonischen sowie individuellen Blattwinkelverstellung ausgebildet sind.

7. Hubschrauber-Hauptrotor mit einer Steuerungseinrichtung nach wenigstens einem der Ansprüche 1 sowie 3 bis 6, **dadurch gekennzeichnet, dass** jedem Rotorblatt zusätzlich mindestens ein Blattwurzelaktuator (24) zugeordnet ist, der jeweils am Rotorkopf (4) angeordnet ist und mit der Blattwurzel (16) des betreffenden Rotorblattes (3) in Wirkverbindung steht.

8. Hubschrauber-Hauptrotor mit einer Steuerungseinrichtung nach Anspruch 7, **dadurch gekennzeichnet, dass** im Normalbetrieb eine Aufteilung der Funktionen der Individualaktuatoren (8) zwischen den Klappenaktuatoren (20) und den Blattwurzelaktuatoren (24) vorgesehen ist.

9. Hubschrauber-Hauptrotor mit einer Steuerungseinrichtung nach Anspruch 2 oder 8, **dadurch gekennzeichnet, dass** die Blattwurzelaktuatoren (24) im Normalbetrieb für die Funktion der zyklischen Blattwinkelverstellung und die Klappenaktuatoren (20) im Normalbetrieb für die Funktion der höherharmonischen sowie individuellen Blattwinkelverstellung vorgesehen sind.

10. Hubschrauber-Hauptrotor mit einer Steuerungseinrichtung nach Anspruch 8 oder 9, **dadurch gekennzeichnet, dass** die Blattwurzelaktuatoren (24) und die Klappenaktuatoren (20) für den Notbetrieb jeweils für die alleinige Übernahme der Funktionen der zyklischen Blattwinkelverstellung und der höherharmonischen sowie individuellen Blattwinkelverstellung ausgebildet sind.

11. Hubschrauber-Hauptrotor mit einer Steuerungseinrichtung nach Anspruch 8, 9 oder 10, **dadurch gekennzeichnet, dass** die Blattwurzelaktuatoren (24) so ausgebildet sind, dass diese im Normalbetrieb sowohl die Funktionen der zyklischen Blattwinkelverstellung als auch in Teilarbeitsbereichen die der höherharmonischen sowie individuellen Blattwinkelverstellung übernehmen können, und dass die Klappenaktuatoren (20) derart ausgebildet sind, dass diese im Normalbetrieb sowohl die Funktionen der höherharmonischen und individuellen Blattwinkelverstellung als auch in Teilarbeitsbereichen die der zyklischen Blattwinkelverstellung übernehmen können.

12. Hubschrauber-Hauptrotor mit einer Steuerungseinrichtung nach wenigstens einem der Ansprüche 1 bis 11, **dadurch gekennzeichnet, dass** die Klappenaktuatoren (20, 23) und/oder die Blattwurzelaktuatoren (24) hydraulisch, pneumatisch oder elektrisch betreibbar ausgebildet sind.

## Claims

1. Helicopter main rotor with a control device, in which a plurality of rotor blades (3) are arranged, distributed circumferentially, on a rotor head (4) of a rotor shaft (2) and they are mounted so as to be rotatable or twistable about a blade longitudinal axis (5), a collective actuator (7) arranged in the stationary system and operatively connected to the blade roots (16) of the rotor blades (3) via regulating means (9-14) being provided for the collective blade-angle adjustment of the rotor blades (3), and, for cyclical and individual blade-angle adjustment, each rotor blade (3) being assigned at least one individual actuator (8) arranged in the rotating system, **characterized in that** each rotor blade (3) has at least one rotor-blade flap (19) which is mounted pivotably about an axis of rotation (18) parallel or coaxial to the blade longitudinal axis (5) and which is deflectable by means of a flap actuator (20) arranged inside the respective rotor blade (3), the flap actuators (20) being provided for the functions of the individual actuator (8).

2. Helicopter main rotor with a control device, in which a plurality of rotor blades (3) are arranged, distributed circumferentially, on a rotor head (4) of a rotor shaft (2) and are mounted so as to be rotatable or twistable about a blade longitudinal axis (5), for cyclical and individual blade-angle adjustment each rotor blade (3) being assigned at least one individual actuator (8) arranged in the rotating system, each rotor blade (3) having at least one rotor-blade flap (19) which is mounted pivotably about an axis of rotation (18) parallel or coaxial to the blade longitudinal axis (5) and which is deflectable by means of a flap actuator (20) arranged inside the respective rotor blade (3), the flap actuators (20) being provided for the functions of the individual actuator (8), and each rotor blade being additionally assigned at least one blade-root actuator (24) which is arranged in each case on the rotor head (4) and is operatively connected to the blade root (16) of the respective rotor blade (3), **characterized in that**, in normal operation, a division of the functions of the individual actuators (8) between the flap actuators (20) and the blade-root actuators (24) is provided.

3. Helicopter main rotor with a control device according to Claim 1 or 2, **characterized in that** each rotor-blade flap (19) is assigned at least two flap actuators (20) connected functionally in parallel.

4. Helicopter main rotor with a control device according to Claim 1, 2 or 3, **characterized in that** each rotor blade has at least two rotor-blade flaps (19, 22) which are arranged so as to be spaced apart radially and are mounted pivotably in each case about an axis of rotation (18, 21) parallel or coaxial to the blade longitudinal axis (5) and which are deflectable in each case by means of a flap actuator (20, 23) arranged inside the respective rotor blade (3) and activatable independently, in normal operation a division of the functions of the individual actuators (8) between the flap actuators (23) of the radially inner rotor-blade flaps (22) and the flap actuators (20) of the radially outer rotor-blade flaps (19) being provided.

5. Helicopter main rotor with a control device according to Claim 4, **characterized in that** the flap actuators (23) of the radially inner rotor-blade flaps (22) are provided in normal operation for the function of cyclic blade-angle adjustment and the flap actuators (20) of the radially outer rotor-blade flaps (19) are provided in normal operation for the functions of higher-harmonic and individual blade-angle adjustment.

6. Helicopter main rotor with a control device according to Claim 4 or 5, **characterized in that** the flap actuators (23) of the radially inner rotor-blade flaps (22) and the flap actuators (20) of the radially outer rotor-blade flaps (19) are designed, for emergency operation, in each case for the sole assumption of the functions of cyclic blade-angle adjustment and of higher-harmonic and individual blade-angle adjustment.

7. Helicopter main rotor with a control device according to at least one of Claims 1 and 3 to 6, **characterized in that** each rotor blade is additionally assigned at least one blade-root actuator (24) which is arranged in each case on the rotor head (4) and which is operatively connected to the blade root (16) of the respective rotor blade (3).

8. Helicopter main rotor with a control device according to Claim 7, **characterized in that**, in normal operation, a division of the functions of the individual actuators (8) between the flap actuators (20) and the blade-root actuators (24) is provided.

9. Helicopter main rotor with a control device according to Claim 2 or 8, **characterized in that** the blade-root actuators (24) are provided in normal operation for the function of cyclical blade-angle adjustment and the flap actuators (20) are provided in normal operation for the function of higher-harmonic and individual blade-angle adjustment.

10. Helicopter main rotor with a control device according to Claim 8 or 9, **characterized in that** the blade-root actuators (24) and the flap actuators (20) are designed, for emergency operation, in each case for the sole assumption of the functions of cyclical blade-angle adjustment and of higher-harmonic and individual blade-angle adjustment.

11. Helicopter main rotor with a control device according to Claim 8, 9 or 10, **characterized in that** the blade-root actuators (24) are designed such that, in normal operation, they can assume both the functions of cyclical blade-angle adjustment and, in working subranges, those of higher-harmonic and individual blade-angle adjustment, and **in that** the flap actuators (20) are designed in such a way that, in normal operation, they can assume both the functions of higher-harmonic and individual blade-angle adjustment and, in working subranges, those of cyclical blade-angle adjustment.

12. Helicopter main rotor with a control device according to at least one of Claims 1 to 11, **characterized in that** the flap actuators (20, 23) and/or the blade-root actuators (24) are designed to be operable hydraulically, pneumatically or electrically.

## Revendications

1. Rotor principal d'un hélicoptère comprenant un dispositif de commande, dans lequel plusieurs pales de rotor (3) sont disposées de manière répartie sur la périphérie au niveau d'une tête de rotor (4) d'un arbre de rotor (2) et sont montées à rotation ou à torsion autour d'un axe longitudinal des pales (5), un actionneur collectif (7) disposé dans le système au repos et en liaison fonctionnelle par le biais de moyens de commande (9-14) avec les pieds de pales (16) des pales de rotor (3) étant prévu pour le réglage collectif de l'angle de pale des pales de rotor (3), et au moins un actionner individuel (8) disposé dans le système en rotation étant associé à chaque pale de rotor (3) pour le réglage cyclique et individuel de l'angle de pale, **caractérisé en ce que** chaque pale de rotor (3) présente au moins un volet de pale de rotor (19) monté pivotant autour d'un axe de rotation (18) parallèle ou coaxial à l'axe longitudinal des pales (5), lequel volet de pale de rotor peut être dévié au moyen d'un actionneur de volet (20) disposé à l'intérieur de la pale de rotor concernée (3), les actionneurs de volets (20) étant prévus pour les fonctions de l'actionneur individuel (8).

2. Rotor principal d'hélicoptère comprenant un dispositif de commande, dans lequel plusieurs pales de rotor (3) sont disposées de manière répartie sur la périphérie au niveau d'une tête de rotor (4) d'un arbre de rotor (2) et sont montées à rotation ou à torsion autour d'un axe longitudinal des pales (5), au moins un actionneur individuel (8) disposé dans le système en rotation étant associé à chaque pale de rotor (3) pour le réglage cyclique et individuel de l'angle de pale, chaque pale de rotor (3) présentant au moins un volet de pale de rotor (19) monté pivotant autour d'un axe de rotation (18) parallèle ou coaxial à l'axe longitudinal des pales (5), lequel volet de pale de rotor peut être dévié au moyen d'un actionneur de volet (20) disposé à l'intérieur de la pale de rotor concernée (3), les actionneurs de volets (20) étant prévus pour les fonctions de l'actionneur individuel (8), et à chaque pied de pale de rotor étant associé au moins un actionneur de pied de pale (24), qui est disposé à chaque fois sur la tête de rotor (4) et qui est en liaison fonctionnelle avec le pied de pale (16) de la pale de rotor concernée (3), **caractérisé en ce que** pendant le mode de fonctionnement normal, une division des fonctions des actionneurs individuels (8) entre les actionneurs de volets (20) et les actionneurs de pieds de pales (24) est prévue.

3. Rotor principal d'hélicoptère comprenant un dispositif de commande selon la revendication 1 ou 2, **caractérisé en ce que** l'on associe à chaque volet de pale de rotor (19) au moins deux actionneurs de volets (20) montés en parallèle par une technique fonctionnelle.

4. Rotor principal d'hélicoptère comprenant un dispositif de commande selon la revendication 1, 2 ou 3, **caractérisé en ce que** chaque pale de rotor présente au moins deux volets de pales de rotor (19, 22) espacés radialement et montés de manière pivotante autour d'un axe de rotation (18, 21) parallèle ou coaxial à l'axe longitudinal des pales (5), lesquels volets de pales de rotor peuvent être déviés à chaque fois au moins d'un actionneur de volet (20, 23) disposé à l'intérieur de la pale de rotor concernée (3) et peuvent être commandés indépendamment, une division des fonctions des actionneurs individuels (8) entre les actionneurs de volets (23) des volets de pales de rotor (22) radialement internes et les actionneurs de volets (20) des volets de pales de rotor (19) radialement externes étant prévue pendant le mode de fonctionnement normal.

5. Rotor principal d'hélicoptère comprenant un dispositif de commande selon la revendication 4, **caractérisé en ce que** les actionneurs de volets (23) des volets de pales de rotor (22) radialement internes sont prévus, pendant le fonctionnement, pour la fonction du réglage de l'angle de pale cyclique et les actionneurs de volets (20) des volets de pales de rotor (19) radialement externes sont prévus pendant le fonctionnement, pour les fonctions de réglage d'harmoniques supérieurs et individuel d'angle de pale.

6. Rotor principal d'hélicoptère comprenant un dispositif de commande selon la revendication 4 ou 5, **caractérisé en ce que** les actionneurs de volets (23) des volets de pales de rotor (22) radialement internes et les actionneurs de volets (20) des volets de pales de rotor (19) radialement externes pour le mode de fonctionnement de secours sont réalisés à chaque fois pour la reprise unique des fonctions du réglage cyclique d'angle de pale et des harmoniques supérieurs ainsi que du réglage individuel d'angle de pale.

7. Rotor principal d'hélicoptère comprenant un dispositif de commande selon au moins l'une quelconque des revendications 1 et 3 à 6, **caractérisé en ce que** l'on associe à chaque pale de rotor en outre au moins un actionneur de pied de pale (24), qui est disposé à chaque fois sur la tête de rotor (4) et qui est en liaison fonctionnelle avec le pied de pale (16) de la pale de rotor concernée (3).

8. Rotor principal d'hélicoptère comprenant un dispositif de commande selon la revendication 7, **caractérisé en ce que** pendant le fonctionnement normal, une division des fonctions des actionneurs individuels (8) entre les actionneurs de volets (20) et les actionneurs de pieds de pales (24) est prévue.

9. Rotor principal d'hélicoptère comprenant un dispositif de commande selon la revendication 2 ou 8, **caractérisé en ce que** les actionneurs de pieds de pales (24), pendant le fonctionnement normal, sont prévus pour la fonction du réglage cyclique de l'angle de pale et les actionneurs de volets (20) sont prévus, pendant le fonctionnement normal, pour la fonction du réglage des harmoniques supérieurs ainsi que du réglage individuel de l'angle de pale.

10. Rotor principal d'hélicoptère comprenant un dispositif de commande selon la revendication 8 ou 9, **caractérisé en ce que** les actionneurs de pieds de pales (24) et les actionneurs de volets (20) pour le fonctionnement de secours sont réalisés à chaque fois pour la reprise unique des fonctions de réglage cyclique de l'angle de pale, et du réglage des harmoniques supérieurs et du réglage individuel de l'angle de pale.

11. Rotor principal d'hélicoptère comprenant un dispositif de commande selon la revendication 8, 9 ou 10, **caractérisé en ce que** les actionneurs de pieds de pale (24) sont réalisés de telle sorte que ceux-ci, pendant le fonctionnement normal, puissent reprendre à la fois les fonctions du réglage cyclique de l'angle de pale ainsi que dans des plages de travail partielles le réglage des harmoniques supérieurs ainsi que le réglage individuel de l'angle de pale, et **en ce que** les actionneurs de volets (20) sont réalisés de telle sorte que ceux-ci, pendant le fonctionnement normal, puissent reprendre à la fois les fonctions du réglage des harmoniques supérieurs et du réglage individuel de l'angle de pale et aussi dans des plages de travail partielles le réglage cyclique de l'angle de pale.

12. Rotor principal d'hélicoptère comprenant un dispositif de commande selon au moins l'une quelconque des revendications 1 à 11, **caractérisé en ce que** les actionneurs de volets (20, 23) et/ou les actionneurs de pieds de pales (24) sont réalisés de manière à pouvoir être commandés hydrauliquement, pneumatiquement ou électriquement.
